# FASCICULE DE BREVET EUROPEEN

(11) **EP 0 560 422 B1**
(45) Date de publication et mention de la délivrance du brevet: **10.01.1996**
(21) Numéro de dépôt: 93200530.9
(22) Date de dépôt: 25.02.1993
(51) Int. Cl.: C01D 1/38, B01D 61/44

(54) **Procédé de fabrication d'hydroxyde de sodium**
Verfahren zur Herstellung von Natriumhydroxid
Process for the production of sodium hydroxide

(30) Priorité: 09.03.1992 BE 9200235
(43) Date de publication de la demande: 15.09.1993
(73) Titulaire: SOLVAY (Société Anonyme), B-1050 Bruxelles (BE)
(72) Inventeur: Bourgeois, Louis, B-1050 Bruxelles (BE)
(74) Mandataire: Anthoine, Paul

(56) Documents cités:
- WO-A-90/14877
- US-A- 4 238 305
- US-A- 4 584 077

## Description

L'invention concerne la fabrication d'hydroxyde de sodium.

Elle concerne plus particulièrement un procédé de fabrication d'hydroxyde de sodium par électrodialyse.

L'électrodialyse est une technique bien connue pour produire des solutions aqueuses d'hydroxyde de sodium. Ainsi, dans le brevet US-A-4238305, on décrit un procédé dans lequel on met en oeuvre une cellule d'électrodialyse comprenant une alternance de membranes cationiques et de membranes bipolaires, on introduit de l'eau ou une solution aqueuse diluée d'hydroxyde de sodium dans les chambres délimitées entre une membrane cationique et la face anionique d'une membrane bipolaire et on introduit une solution aqueuse de carbonate de sodium dans les chambres délimitées entre une membrane cationique et la face cationique d'une membrane bipolaire. Dans ce procédé connu, on maintient un pH alcalin dans les chambres qui sont alimentées avec l'eau ou la solution d'hydroxyde de sodium et un pH acide dans les chambres qui sont alimentées avec la solution de carbonate de sodium. On génère de la sorte du dioxyde de carbone dans les chambres acides.
Dans ce procédé connu, la génération de dioxyde de carbone dans la cellule d'électrodialyse présente des inconvénients. En effet, les membranes bipolaires utilisées dans ces procédés connus sont formées par accolement d'une membrane anionique et d'une membrane cationique, de sorte que si du dioxyde de carbone se forme dans les pores de la face cationique de la membrane bipolaire, les deux membranes qui la constituent risquent de se désolidariser l'une de l'autre. D'autre part, le gaz ainsi produit soumet les membranes à des efforts mécaniques susceptibles de les détériorer et augmente en outre, de manière significative, la résistance électrique de l'électrolyte et, par voie de conséquence la consommation électrique.

Le procédé selon l'invention remédie à ces inconvénients du procédé connu décrit ci-dessus, en fournissant un procédé amélioré qui permet de produire une solution aqueuse d'hydroxyde de sodium dans une cellule d'électrodialyse qui n'est pas le siège d'une formation d'un gaz.

L'invention concerne dès lors un procédé de fabrication d'hydroxyde de sodium, selon lequel on met en oeuvre une cellule d'électrodialyse, on introduit de l'eau ou une solution aqueuse d'hydroxyde de sodium dans une chambre de la cellule, délimitée entre une membrane cationique et une face anionique d'une membrane bipolaire, on introduit une solution aqueuse de carbonate de sodium dans une chambre de la cellule, délimitée entre une face cationique de la membrane bipolaire et une autre membrane cationique et on soutire une solution aqueuse d'hydroxyde de sodium de la chambre contenant la face anionique de la membrane bipolaire; selon l'invention, on maintient un pH alcalin dans la chambre qui est alimentée avec la solution de carbonate de sodium.

Dans le procédé selon l'invention, on entend désigner par membrane cationique une feuille mince, non poreuse, sélectivement perméable aux cations et imperméable aux anions. Les membranes cationiques utilisables dans le procédé selon l'invention doivent être en une matière inerte vis-à-vis des solutions aqueuses d'hydroxyde de sodium. Des membranes cationiques utilisables dans le procédé selon l'invention sont par exemple des feuilles en polymère fluoré contenant des groupements fonctionnels cationiques dérivés d'acides sulfoniques, d'acides carboxyliques ou d'acides phosphoniques ou des mélanges de tels groupements fonctionnels. Des exemples de membranes de ce type sont celles décrites dans les brevets GB-A-1497748 et GB-A-1497749 (ASAHI KASEI KOGYO K.K.), GB-A-1518387 et GB-A-1522877 (ASAHI GLASS COMPANY LTD) et GB-A-1402920 (DIAMOND SHAMROCK CORP.). Des membranes particulièrement adaptées à cette application de la cellule selon l'invention sont celles connues sous les noms "NAFION" (DU PONT) et "FLEMION" (ASAHI GLASS COMPANY LTD).

Les membranes bipolaires sont des membranes qui présentent, sur une face, les propriétés d'une membrane cationique et, sur l'autre face, les propriétés d'une membrane anionique, une membrane anionique étant, par définition, une feuille mince, non poreuse, sélectivement perméable aux anions et imperméable aux cations. Les membranes bipolaires peuvent généralement être obtenues par accolement d'une membrane cationique et d'une membrane anionique en exploitant par exemple, à cet effet, les techniques décrites dans la demande de brevet britannique GB-A-2122543 et dans la demande internationale de brevet WO 89/1059 (toutes deux au nom de UNISEARCH LTD). Des membranes anioniques utilisables dans la confection des membranes bipolaires utilisables dans le procédé selon l'invention sont des feuilles en un matériau polymérique inerte vis-à-vis des solutions aqueuses d'hydroxyde de sodium et comprenant des groupements d'ammonium quaternaire jouant le rôle de sites anioniques fixes.

Dans la pratique, les membranes cationiques ne sont pas idéalement imperméables aux anions et les membranes anioniques ne sont pas idéalement imperméables aux cations. Par définition, le rendement de courant d'une membrane cationique est la fraction molaire du cation qui traverse effectivement la membrane sous l'action d'un Faraday. De manière similaire, le rendement de courant d'une membrane anionique est la fraction molaire de l'anion qui traverse effectivement la membrane sous l'action d'un Faraday.

La cellule d'électrodialyse comprend au moins une membrane bipolaire et deux membranes cationiques entre une anode et une cathode reliées respectivement à la borne positive et à la borne négative d'une source de courant continu. L'anode est située du côté de la face anionique de la membrane bipolaire et la cathode est située du côté de la face cationique de la membrane bipolaire.

Dans la chambre comprenant la face cationique de la membrane bipolaire, on introduit une solution aqueuse de carbonate de sodium. La solution aqueuse de carbonate de sodium peut être une solution diluée ou une solution concentrée. On préfère utiliser des solutions concentrées, dont la concentration doit toutefois être compatible avec la solubilité du bicarbonate de sodium dans l'eau, de manière à éviter une précipitation de bicarbonate de sodium dans la cellule.

Dans la chambre comprenant la face anionique de la membrane bipolaire, on introduit de l'eau ou une solution aqueuse diluée d'hydroxyde de sodium. On entend désigner par solution aqueuse diluée d'hydroxyde de sodium, une solution non saturée. La concentration en hydroxyde de sodium de la solution aqueuse est conditionnée par la nécessité d'éviter une détérioration des membranes par l'hydroxyde de sodium. A cet effet, on préconise de sélectionner une concentration en hydroxyde de sodium inférieure à 10 moles/l, de préférence à 5 moles/l, les concentrations n'excédant pas 2,5 moles/l étant spécialement recommandées. En pratique, on obtient de bons résultats en sélectionnant des solutions aqueuses dont la concentration en hydroxyde de sodium est supérieure à 0,2 mole/l, de préférence au moins égale à 0,5 mole/l, les concentrations préférées se situant entre 1 et 2 moles/l.

Sous l'action du courant électrique d'électrodialyse, il y a dissociation de l'eau dans la membrane bipolaire, diffusion de cations Na⁺ à travers les membranes cationiques, formation d'hydroxyde de sodium dans la chambre comprenant la face anionique de la membrane bipolaire et conversion d'une partie au moins du carbonate de sodium en bicarbonate de sodium dans l'autre chambre.

Selon l'invention, on maintient dans la chambre comprenant la face cationique de la membrane bipolaire, un pH suffisamment alcalin pour empêcher une décomposition du bicarbonate de sodium. D'une manière générale, la valeur minimum du pH à réaliser dépend de la concentration de la solution aqueuse de carbonate de sodium mise en oeuvre. En pratique, il est souhaitable de maintenir un pH supérieur à 8, de préférence au moins égal à 8,2. La valeur recherchée du pH est généralement réalisée par un réglage approprié des teneurs respectives en carbonate et bicarbonate de sodium dans la solution aqueuse présente dans la cellule, ces teneurs dépendant elles-mêmes du débit de la solution dans la cellule. En pratique, le pH est maintenu au-dessous de 10 et n'excède généralement pas 9. Les valeurs comprises d'environ 8,2 à environ 9 sont spécialement recommandées.

Dans le procédé selon l'invention, on soutire une solution aqueuse d'hydroxyde de sodium hors de la chambre comprenant la face anionique de la membrane bipolaire et une solution aqueuse de bicarbonate de sodium (contenant éventuellement du carbonate de sodium) hors de la chambre comprenant la face cationique de la membrane bipolaire. Ces solutions peuvent être valorisées séparément. En particulier, la solution de bicarbonate de sodium peut être soumise à un refroidissement pour cristalliser du bicarbonate de sodium, ou être envoyée telle quelle dans une soudière à l'ammoniaque.

Dans une forme de réalisation particulière du procédé selon l'invention, on décompose le bicarbonate de sodium recueilli de la cellule, pour produire du carbonate de sodium que l'on recycle dans la chambre contenant la face cationique de la membrane bipolaire. Dans cette forme de réalisation du procédé, le moyen utilisé pour décomposer le bicarbonate de sodium n'est pas critique. On peut par exemple traiter la solution aqueuse de bicarbonate de sodium extraite de la cellule, avec de l'oxyde ou de l'hydroxyde de métal alcalin ou alcalino-terreux. On utilise de préférence un lait de chaux.

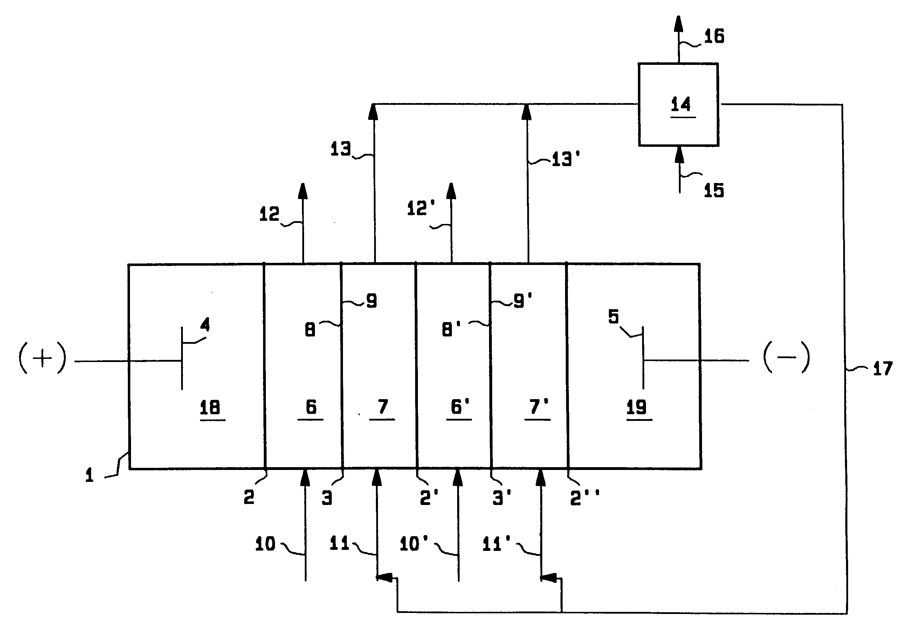

Des particularités et détails de l'invention vont ressortir de la description suivante du dessin annexé, qui représente schématiquement une cellule d'électrodialyse pour la mise en oeuvre du procédé selon l'invention.

La cellule représentée à la figure comprend, dans une enceinte 1, une alternance de trois membranes cationiques 2, 2', 2'' et de deux membranes bipolaires 3, 3' entre une anode 4 et une cathode 5. Les membranes 2, 3, 2', 3' et 2'' définissent entre elles quatre chambres d'électrodialyse 6, 7, 6', 7'. Les membranes 2, 2' et 2'' sont des membranes cationiques et les membranes 3 et 3' sont des membranes bipolaires. La disposition de la membrane bipolaire 3 dans la cellule est telle que sa face anionique 8 soit située dans la chambre 6 et sa face cationique 9 dans la chambre 7. De manière similaire, la membrane bipolaire 3' a sa face anionique 8' dans la chambre 6' et sa face cationique 9' dans la chambre 7'.

En pratique les cellules d'électrodialyse industrielles comprennent un grand nombre (généralement plusieurs dizaines) de chambres telles que 6 (et 6') et 7 (et 7').

Pendant l'exploitation de la cellule d'électrodialyse, on introduit de l'eau ou une solution aqueuse diluée d'hydroxyde de sodium 10 (10') dans la chambre 6 (6'), on introduit une solution aqueuse de carbonate de sodium 11 (11') dans la chambre 7 (7') et on relie les électrodes 4 et 5 aux bornes d'une source de courant continu. Dans les chambres d'extrémité 18 et 19 contenant les électrodes 4 et 5, on fait circuler un électrolyte aqueux dont la composition n'est pas critique. Sous l'effet de la différence de potentiel entre les électrodes 4 et 5, il y a dissociation d'eau sur les membranes bipolaires 3 et 3', donnant lieu à la formation de protons dans les chambres 7 et 7' et à la formation d'ions hydroxyle dans les chambres 6 et 6'. Simultanément, des cations sodium migrent de la chambre 7 dans la chambre 6' en traversant la membrane cationique 2'. Il y a de la sorte formation d'hydroxyde de sodium dans les chambres 6 et 6' et de bicarbonate de sodium dans les chambres 7 et 7', au détriment du carbonate de sodium.

Selon l'invention, on règle les débits des solutions de manière à maintenir un pH voisin de 8,5 dans la chambre 7, pour éviter une décomposition du bicarbonate de sodium qui s'y forme.

On recueille des chambres 6 et 6' une solution aqueuse d'hydroxyde de sodium 12 (respectivement 12') et, des chambres 7 et 7', une solution aqueuse de carbonate et de bicarbonate de sodium 13 (respectivement 13'). La solution aqueuse 13, 13' est envoyée dans une chambre de réaction 14 dans laquelle on introduit par ailleurs un lait de chaux 15 en une quantité suffisante pour décomposer le bicarbonate de sodium. On soutire de la chambre de réaction 14, du carbonate de calcium 16 et une solution aqueuse 17 de carbonate de sodium que l'on recycle dans les chambres 7, 7'.

L'exemple suivant sert à illustrer l'invention.

On met en oeuvre une cellule d'électrodialyse telle que représentée à la figure, dans laquelle chaque membrane présente une superficie de 1 m² et on y fait circuler un courant de 1 kA.

On introduit de l'eau dans la chambre 6, selon un débit horaire de 12,87 l et, dans la chambre 7, une solution aqueuse de carbonate de sodium (contenant 156 g de carbonate de sodium par l) selon un débit horaire de 23,3 l.

Le rendement de la membrane bipolaire 3 étant supposé égal à 0,95 et celui de la membrane cationique 2, à 0,97, la production horaire de la cellule est de 12,3 l d'une solution aqueuse à 10 % en poids d'hydroxyde de sodium et de 23,3 kg d'une solution aqueuse saturée de bicarbonate de sodium (contenant 0,124 kg de bicarbonate de sodium par kg).

## Revendications

1. Procédé de fabrication d'hydroxyde de sodium, selon lequel on met en oeuvre une cellule d'électrodialyse, on introduit de l'eau ou une solution aqueuse d'hydroxyde de sodium (10, 10') dans une chambre (6, 6') de la cellule, délimitée entre une membrane cationique (2, 2') et une face anionique (8, 8') d'une membrane bipolaire (3, 3'), on introduit une solution aqueuse de carbonate de sodium (11, 11') dans une chambre (7, 7') de la cellule, délimitée entre une face cationique (9, 9') de la membrane bipolaire (3, 3') et une autre membrane cationique (2', 2'') et on soutire une solution aqueuse d'hydroxyde de sodium (12, 12') de la chambre (6, 6') contenant la face anionique (8, 8') de la membrane bipolaire, caractérisé en ce qu'on maintient un pH alcalin dans la chambre (7, 7') qui est alimentée avec la solution de carbonate de sodium (11, 11').

2. Procédé selon la revendication 1, caractérisé en ce qu'on maintient un pH suffisamment alcalin dans la chambre (7, 7') qui est alimentée avec la solution de carbonate de sodium (11, 11') pour éviter une décomposition du bicarbonate de sodium.

3. Procédé selon la revendication 2, caractérisé en ce qu'on maintient un pH supérieur à 8 dans la chambre (7, 7') qui est alimentée avec la solution de carbonate de sodium (11, 11').

4. Procédé selon la revendication 3, caractérisé en ce qu'on maintient un pH compris entre 8,2 et 9 dans la chambre (7, 7') qui est alimentée avec la solution aqueuse de carbonate de sodium (11, 11').

5. Procédé selon l'une quelconque des revendications 1 à 4, caractérisé en ce qu'on soutire une solution aqueuse de bicarbonate de sodium (13, 13') hors de la chambre (7, 7') alimentée avec la solution de carbonate de sodium (11, 11'), on décompose le bicarbonate de sodium de la solution (11, 11') et on recycle le carbonate de sodium recueilli de la décomposition du bicarbonate de sodium dans la cellule.

6. Procédé selon la revendication 5, caractérisé en ce qu'on traite la solution de bicarbonate de sodium (13, 13') avec de l'(hydr)oxyde de métal alcalin ou alcalino-terreux (15) pour décomposer le bicarbonate de sodium.

7. Procédé selon la revendication 6, caractérisé en ce qu'on traite la solution de bicarbonate de sodium (13, 13') avec un lait de chaux (15).

## Claims

1. Process for the manufacture of sodium hydroxide, according to which an electrodialysis cell is used, water or an aqueous sodium hydroxide solution (10, 10') is introduced into a chamber (6, 6') of the cell, defined between a cationic membrane (2, 2') and an anionic face (8, 8') of a bipolar membrane (3, 3'), an aqueous sodium carbonate solution (11, 11') is introduced into a chamber (7, 7') of the cell, defined between a cationic face (9, 9') of the bipolar membrane (3, 3') and another cationic membrane (2', 2''), and an aqueous sodium hydroxide solution (12, 12') is drawn off from the chamber (6, 6') containing the anionic face (8, 8') of the bipolar membrane, characterised in that an alkaline pH is maintained in the chamber (7, 7') which is supplied with the sodium carbonate solution (11, 11').

2. Process according to Claim 1, characterised in that, in the chamber (7, 7') which is supplied with the sodium carbonate solution (11, 11'), a pH is maintained which is sufficiently alkaline to avoid decomposition of the sodium bicarbonate.

3. Process according to Claim 2, characterised in that a pH greater than 8 is maintained in the chamber (7, 7') which is supplied with the sodium carbonate solution (11, 11').

4. Process according to Claim 3, characterised in that a pH between 8.2 and 9 is maintained in the chamber (7, 7') which is supplied with the aqueous sodium carbonate solution (11, 11').

5. Process according to any one of Claims 1 to 4, characterised in that an aqueous sodium bicarbonate solution (13, 13') is drawn off from the chamber (7, 7') supplied with the sodium carbonate solution (11, 11'), the sodium bicarbonate of the solution (11, 11') is decomposed and the sodium carbonate collected from the decomposition of the sodium bicarbonate is recycled to the cell.

6. Process according to Claim 5, characterised in that the sodium bicarbonate solution (13, 13') is treated with alkali metal or alkaline-earth metal (hydr)oxide (15) to decompose the sodium bicarbonate.

7. Process according to Claim 6, characterised in that the sodium bicarbonate solution (13, 13') is treated with milk of lime (15).

## Patentansprüche

1. Verfahren zur Herstellung von Natriumhydroxid, gemäß dem man eine Elektrodialysezelle einsetzt, man Wasser oder eine wäßrige Natriumhydroxidlösung (10, 10') in eine Kammer (6, 6') der Zelle einführt, die von einer kationischen Membran (2, 2') und einer anionischen Seite (8, 8') einer bipolaren Membran (3, 3') begrenzt ist, man eine wäßrige Natriumcarbonatlösung (11, 11') in eine Kammer (7, 7') der Zelle einführt, die von einer kationischen Seite (9, 9') der bipolaren Membran (3, 3') und einer anderen kationischen Membran (2', 2'') begrenzt ist, und man der Kammer (6, 6'), die die anionische Seite (8, 8') der bipolaren Membran enthält, eine wäßrige Natriumhydroxidlösung (12, 12') entnimmt, dadurch gekennzeichnet, daß man in der Kammer (7, 7'), die mit der Natriumcarbonatlösung (11, 11') gespeist wird, einen alkalischen pH aufrechterhält.

2. Verfahren gemäß Anspruch 1, dadurch gekennzeichnet, daß man in der Kammer (7, 7'), die mit der Natriumcarbonatlösung (11, 11') gespeist wird, einen pH aufrechterhält, der genügend alkalisch ist, um eine Zersetzung von Natriumbicarbonat zu vermeiden.

3. Verfahren gemäß Anspruch 2, dadurch gekennzeichnet, daß man in der Kammer (7, 7'), die mit der Natriumcarbonatlösung (11, 11') gespeist wird, einen pH aufrechterhält, der höher als 8 ist.

4. Verfahren gemäß Anspruch 3, dadurch gekennzeichnet, daß man in der Kammer (7, 7'), die mit der wäßrigen Natriumcarbonatlösung (11, 11') gespeist wird, einen pH zwischen 8,2 und 9 aufrechterhält.

5. Verfahren gemäß einem der Ansprüche 1 bis 4, dadurch gekennzeichnet, daß man aus der Kammer (7, 7'), die mit der Natriumcarbonatlösung (11, 11') gespeist wird, eine wäßrige Natriumbicarbonatlösung (13, 13') entnimmt, man das Natriumbicarbonat der Lösung (13, 13') zersetzt und man das Natriumcarbonat, das aus der Zersetzung des Natriumbicarbonats gewonnen wird, in die Zelle zurückführt.

6. Verfahren gemäß Anspruch 5, dadurch gekennzeichnet, daß man die Natriumbicarbonatlösung (13, 13') mit Alkali- oder Erdalkalimetall(hydr)oxid (15) behandelt, um das Natriumbicarbonat zu zersetzen.

7. Verfahren gemäß Anspruch 6, dadurch gekennzeichnet, daß man die Natriumbicarbonatlösung (13, 13') mit einer Kalkmilch (15) behandelt.
